# EUROPEAN PATENT APPLICATION

(11) **EP 1 608 162 A2**
(43) Date of publication of application: **21.12.2005**
(21) Application number: 05253226.4
(22) Date of filing: 25.05.2005
(51) Int. Cl.: H04N 5/775

(54) **Television system**

(30) Priority: 16.06.2004 GB 0413403
(71) Applicant: Pace Micro Technology Ltd, Saltaire, Shipley BD18 3LF (GB)
(72) Inventor: Walsh,Paul, Saltaire Shipley, BD18 3LF (GB)
(74) Representative: Tomkinson, Alexandra

(57) **Abstract**

A television system is provided which includes a video cassette recorder (10) (VCR) and a broadcast data receiver (8) (BDR) for receiving digital data from a remote broadcaster and processing and decoding said data to provide video, audio and/or auxiliary data for display on a television (4) (TV) and/or for sounding via one or more speakers (14). The video, audio and/or auxiliary data relate to a plurality of television channels. The VCR (10) communicates with the television (4) via the BDR (8). The BDR (8) is provided with detection means for detecting which of the plurality of channels the VCR (10) and/or television (4) is tuned to.

## Description

This invention relates to a television system, and particularly to a television system including a video cassette recorder (VCR) and a broadcast data receiver (BDR).

The term BDR used in the following description refers to receiver means which are capable of receiving digital data from a remote location, typically a remote broadcast provider, and processing and/or decoding said data to provide video, audio and/or auxiliary data for display on a display screen, such as a television set and/or for sounding via speakers. An example of a BDR is apparatus commonly referred to as a set top box.

In the near future, all television networks will provide digital services and analogue services will be removed from networks to release bandwidth. Conventional television systems which are designed for analogue services will be required to have some form of converter box or use a BDR to convert the incoming digital data back into analogue data to allow the conventional components of the television system to function, such as a television set and VCR. Thus, rather than the VCR communicating directly with the television system as is currently the case with analogue systems, the VCR will communicate indirectly with the television system via the converter box or BDR. The converter box receives digital broadcast data relating to a plurality of television channels, converts the digital data to analogue data and provides the correct channel data to the VCR and/or television as required. However, problems can arise when the VCR has been pre-programmed to record a television programme on a particular television channel and the channel on the television is subsequently changed by a user. The converter box or BDR is currently unable to detect a VCR pre-programmed event, such as a pre-programmed recording, and, if the converter box or BDR is providing data to the VCR and/or television relating to a different channel then the channel pre-programmed in the VCR for recording at a pre-determined time interval, the VCR is likely to record the wrong channel. In order to avoid this problem a user is typically required to check that the BDR is tuned to the same channel as the VCR is pre-programmed to record. However, it may not be possible to have the user present at the time of a VCR recording.

In order to overcome the abovementioned problem, it is currently possible to use an Infra-Red (IR) blaster on a flying lead which is connected to the BDR or converter box. The IR blaster is an IR transmitter which replicates VCR control commands to enable the BDR to control the VCR and hence start and stop VCR recordings. Thus, the BDR is programmed with a recording rather than the VCR directly. When a timed event takes place, such as a pre-programmed recording, the BDR instructs the VCR via the IR blaster to start/stop the recording. A problem with this solution is that the BDR or converter box must be provided with an additional component and lead, thereby increasing the cost of providing the same. In addition, the system is often difficult to set up and the BDR or converter box needs to be pre-programmed with all the possible VCR codes to allow the box or BDR to determine which channel the VCR is preprogrammed to record.

A further solution is to provide timers on the VCR and BDR which are programmed to coincide so that both the BDR and VCR are set to be tuned to the same channel at the same predetermined time, thereby ensuring the correct channel is videoed by the VCR as is intended by a user. However, if the timers are not synchronized then a different or incomplete program may be recorded. In addition, it is time consuming for a user to have to set two timers in order to record a programme on a television channel.

It is therefore an aim of the present invention to provide a television system which can allow the channel of a BDR to be synchronised with the television and/or the VCR without requiring additional expensive equipment to be provided.

It is a further aim of the present invention to provide a television system which does not require the user to undertake any time consuming or difficult operations in order to ensure the VCR records the correct channel a user wishes to be recorded.

According to a first aspect of the present invention there is provided a television system, said television system including a video cassette recorder (VCR) and a broadcast data receiver (BDR) for receiving digital data from a remote broadcaster and processing and decoding said data to provide video, audio and/or auxiliary data for display on a television and/or for sounding via one or more speakers, said video, audio and/or auxiliary data relating to a plurality of television channels, said VCR communicating with said television via said BDR, characterized in that said BDR is provided with detection means for detecting which of the plurality of television channels the VCR and/or television is tuned to.

Once the BDR has detected that it is tuned to a different channel to the VCR and/or television (TV), the BDR can change the channel to which it is tuned to.

In one embodiment the BDR transmits one or more signals to the TV and/or VCR and monitors one or more signals returned from the television and/or VCR, the detection means allowing the BDR to detect any difference between the transmitted outgoing signals and the returned signals.

Thus, by detecting whether there is a difference between the signal transmitted to the VCR and/or TV and the signal returned from the VCR and/or television, the BDR can determine whether a channel change has taken place. This information is required in one example to allow the BDR to transmit the correct broadcast data required for a pre-preprogrammed VCR recording or pre-programmed event to take place.

The detection means uses a closed loop system where the BDR transmits one or more signals to the TV and/or VCR and one or more signals are then fed back from said TV and/or VCR to the BDR. The BDR compares the transmitted and received signals to determine whether the signals or one or more portions thereof are the same. If the signals or portions of the signals are the same, the BDR can conclude that it is tuned to the same channel as the TV and/or VCR. If the signals are different, the BDR can conclude that it is tuned to a different channel to the TV and/or VCR. The BDR can then select to transmit the correct channel information.

The video and/or the audio data streams are monitored by the detection means provided in the BDR.

In one embodiment an audio data stream is monitored and the detection means are in the form of a bandpass filter provided in the BDR.

The detection means allows the BDR to detect/monitor one or more characteristics or properties of the audio and/or video data streams and/or one or more markers provided in the data streams.

In one embodiment a video data stream is monitored, and particularly a Composite Video Signal (CVBS) signal or baseband video output transmitted from the TV and/or VCR to the BDR is monitored to allow the BDR to determine whether this signal is different to the signal transmitted to the TV and/or VCR from the BDR.

Preferably the detection means are in the form of radio frequency remodulation means.

Preferably the VCR and/or TV has means for providing a baseband video output to the BDR, and further preferably the VCR and/or TV is compatible with SCART and/or phono leads.

In one embodiment marker means are inserted into the incoming video and/or audio data streams by the BDR to form a remodulated data stream (i.e. data received and processed by the BDR has marker means inserted therein). The BDR sends the remodulated data stream to the VCR and/or TV and if the data stream returned does not include the marker means, the BDR can detect that a channel change has taken place in the TV and/or VCR. The BDR then changes the output channel of the remodulated data until a match is found between the marker means in the returned signal and the marker means in the outgoing signal. If the marker means is contained in the data stream returned to the VCR and/or TV, the BDR can detect that the BDR is tuned to the same channel as the TV and/or VCR.

The BDR typically inserts the marker means into the incoming data stream as soon as the data stream is received or a pre-determined period of time thereafter. For example, marker means can be attached to a data stream just prior to being remodulated and output to the TV and/or VCR.

In one embodiment a unique marker can be designated to each of the plurality of television channels and reference to the plurality of markers and associated channels can be stored in memory in or associated with the BDR. As such, the BDR can determine which marker relates to which channel and search the channel data for a required channel marker when a channel change has been detected.

The marker means typically includes a code, such as teletext type data, and preferably can be inserted into an off screen video line of a video data stream or into an audio data stream.

In a further embodiment one or more properties and/or characteristics of the video and/or audio data stream are monitored by the detection means in the BDR. For example, the one or more properties can include any or any combination of the level of noise associated with the incoming video data stream, video sync., frequency, average picture level detection, luminance, chrominance and/or the like.

In one embodiment the BDR transmits the video and/or audio data to the TV and/or VCR via a radio frequency remodulator. The BDR has control of the frequency of the signal transmitted to the TV and/or VCR and the BDR compares this frequency with the frequency of the signal returned from the TV and/or VCR. If the frequency of the outgoing and returned signals are different, the BDR then searches for data streams having the same frequency as that of the data being returned from the TV and/or VCR.

Preferably the BDR stores a plan of the analogue channels in relation to one or more properties, characteristics, marker means and/or the like relating to each channel, such as the frequency of each channel, in memory means in or associated with the BDR. Thus, for example, BBC 1 is channel 51, BBC 2 is channel 52 etc. If the detection means finds a match between the outgoing and returned signals at channel 51 then the BDR knows the TV and/or VCR are tuned to BBC 1. This allows the BDR to detect the channel the VCR is preprogrammed to.

When a pre-programmed recording event occurs, the VCR will alter its tuner to the desired recording channel. The BDR will detect this change and will adjust the data being sent to the VCR accordingly.

The VCR can be connected to or communicate with the television via the BDR or the VCR can form an integral part of the television.

The detection means can monitor the signals being transmitted to and returned from the television and/or VCR at pre-determined time intervals and/or substantially continuously, as required.

Preferably the detection means of the BDR is provided in two parts, a first part for detecting the outgoing and returned signals from the VCR and a second part for detecting the outgoing and returned signals from the TV.

As soon as the BDR detects a difference between the outgoing and returned signals, the BDR will search for the correct channel corresponding to the returned signal.

According to a second aspect of the present invention there is provided a broadcast data receiver (BDR) for use in a television system as hereinbefore described.

According to a further aspect of the present invention there is provided a method of detecting a channel change in a television system, said television system including a video cassette recorder (VCR) and a broadcast data receiver (BDR) for receiving digital data from a remote broadcaster and processing and decoding said data to provide video, audio and/or auxiliary data for display on a television and/or for sounding via one or more speakers, said video, audio and/or auxiliary data relating to a plurality of television channels, said VCR communicating with said television via said BDR, said method including the steps of the BDR detecting which of the plurality of television channels the VCR and/or television is tuned to using detection means and, on detection of a difference between the channel the BDR is tuned to and the channel the VCR and/or television is tuned, said BDR sending the correct channel data to said VCR and/or said TV.

According to a yet further aspect of the present invention there is provided a method of detecting a channel change in a television system, said television system including a video cassette recorder (VCR) and a broadcast data receiver (BDR) for receiving digital data from a remote broadcaster and processing and decoding said data to provide video, audio and/or auxiliary data for display on a television screen and/or for sounding via one or more speakers, said video, audio and/or auxiliary data relating to a plurality of television channels, said VCR communicating with said television screen via said BDR, said BDR provided with detection means for detecting which of the plurality of television channels the VCR and/or television is tuned to, said method includes the steps of the BDR transmitting one or more signals to the television and/or VCR, the VCR and/or television returning one or more signals to the BDR, the BDR comparing the signals transmitted with the signals returned using said detection means and, if one or more pre-determined differences are identified, the BDR can determine that a channel change has taken place.

In the event that the BDR detects that a channel change has taken place, the BDR then cycles through channel data and transmits the same to the VCR and/or TV until a match is found in relation to one or more properties, characteristics and/or marker means match between the outgoing signal and the returned signal.

Embodiments of the present invention will now be described with reference to the accompanying figures, wherein:

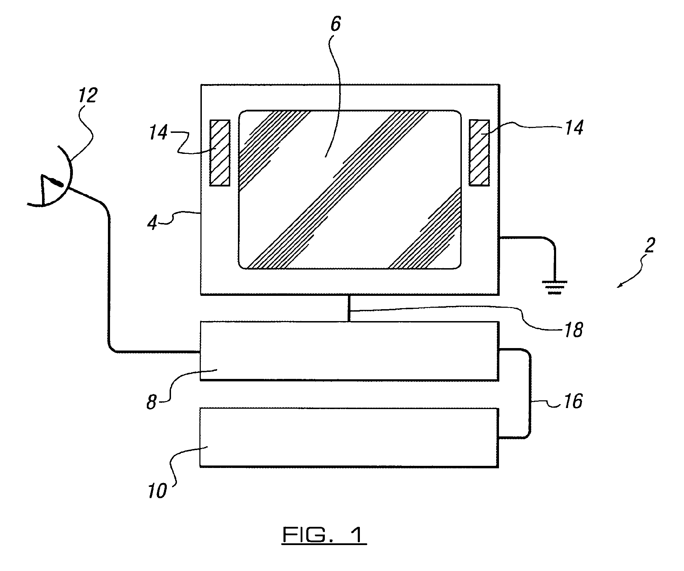

Figure 1 illustrates the components of the television system according to an embodiment of the present invention.

Referring to figure, there is illustrated a television system 2 including a television set (TV) 4 having a display screen 6, a broadcast data received in the form of a set top box (STB) 8 and a VCR 10. The STB 8 can receive digital data via cable, satellite and/or other communication means and in this embodiment the STB 8 receives digital data broadcast from a service provider via satellite dish 12. The VCR 10 and TV 4 are analogue operating apparatus and STB 8 is provided to allow digital data received via satellite 12 to be converted to analogue data. Thus, STB 8 is operating as a converter box and processes and decodes the incoming data to provide analogue video, audio and/or auxiliary data relating to a plurality of television channels for display on TV 4 and/or for listening to via speakers 14.

The VCR 10 is connected to STB 8 via lead 16 and the STB is connected to TV 4 via lead 18.

In accordance with the present invention in one embodiment, the STB 8 adds a marker to the incoming video data stream, typically by adding a pre-determined code or marker to an off screen video line. This remodulated video signal is then fed to the VCR 10 and/or TV 4 as required. The STB 8 continuously monitors the baseband video signal output returned from the VCR 10 and/or TV 4 using detection means to detect the presence of the marker. If the marker is detected on the baseband output signal, then the STB 8 can determine that it is tuned to the same channel as the TV or VCR.

If the STB does not detect the marker in the baseband output signal, the STB 8 can conclude that the TV or VCR has been changed to a different channel. The STB 8 will therefore change its remodulated output channel signal and cycle through a known channel list stored in memory means in the STB until the marker means in the signal received from the TV or VCR matches the marker means in the signal being transmitted. At this point, the STB can determine that it is tuned to the same channel as the VCR or TV, what the channel is and what video and/or audio data needs to be decoded and output via a radio frequency remodulator in the BDR.

In accordance with another embodiment of the present invention, the STB 8 monitors one or more characteristics of the baseband video output received from the TV and/or VCR and compares this to the same characteristics in the data stream being transmitted from the STB to the VCR and/or TV. If there is a difference between the detected characteristics in the baseband video output compared to the STB transmitted data, then the STB 8 can determine that it is tuned to a different channel to the VCR and/or TV. For example, the picture content of the baseband video output can be monitored such that if the returning signal includes a large amount of noise, the STB can detect that the VCR or TV is probably receiving no signal at all, for example the TV 4 could be displaying a fuzzy screen. If the returning signal shows that the picture content includes a single colour, the STB can detect that the VCR or TV is tuned to a blank screen and/or the like.

In addition, a table of information relating to one or more characteristics and/or properties of channel data can be stored in memory means in the STB. For example, the frequency of each channel can be stored in the table so the STB can determine which channel the TV and/or VCR is tuned to depending on the frequency of the signal being received from the TV and/or VCR. If a different frequency of signal is being received by the STB compared to the outgoing signal transmitted from the STB to the TV and/or VCR, the STB can cycle through the channel information until the correct channel with the detected frequency is identified.

Thus, the present invention provides an inexpensive means of allowing channel detection without utilizing additional equipment and without requiring a user to undertake time consuming operations.

## Claims

1. A television system, said television system including a video cassette recorder (VCR) and a broadcast data receiver (BDR) for receiving digital data from a remote broadcaster and processing and decoding said data to provide video, audio and/or auxiliary data for display on a television (TV) and/or for sounding via one or more speakers, said video, audio and/or auxiliary data relating to a plurality of television channels, said VCR communicating with said television via said BDR, **characterized in that** the BDR is provided with detection means for detecting which of the plurality of channels the VCR and/or television is tuned to.

2. A system according to claim 1 **characterized in that** the detection means detects a difference between the channel the BDR is tuned to and the channel or channels the VCR and/or TV are tuned to.

3. A system according to claim 1 **characterized in that** the detection means identifies the channel or channels the VCR and/or TV is tuned to.

4. A system according to claim 1 **characterized in that** once the BDR detects that it is tuned to a different channel to that of the VCR and/or TV, the BDR can change the channel data being sent to the VCR and/or TV.

5. A system according to claim 1 **characterized in that** the BDR transmits one or more signals to the TV and/or VCR and monitors one or more signals returned from the TV and/or VCR, the detection means detecting whether there is any difference between the transmitted signal and the returned signal.

6. A system according to claim 1 **characterized in that** audio data streams are monitored by the detection means, the detection means being in the form of a bandpass filter provided in the BDR.

7. A system according to claim 1 **characterized in that** video data streams are monitored by the detection means.

8. A system according to claim 1 **characterized in that** the detection means is in the form of a radio frequency remodulation means.

9. A system according to claim 5 **characterized in that** the VCR and/or TV provide a baseband video output to the BDR.

10. A system according to claim 1 **characterized in that** VCR and/or TV are compatible with SCART and/or phono leads.

11. A system according to claim 1 **characterized in that** the BDR inserts marker means into incoming data streams to form remodulated data streams and the detection means monitors the presence of absence of these markers means in the data streams.

12. A system according to claim 11 **characterized in that** if the BDR detects that marker means are not present in a signal being returned from the TV and/or VCR, the BDR changes the output channel of the remodulated data until a match is found between the marker means in the returned signal and the marker means in the outgoing signal.

13. A system according to claim 11 **characterized in that** unique marker means are designated to each of a plurality of television channels and reference to each of the markers and the associated channels are stored in memory in the BDR.

14. A system according to claim 11 **characterized in that** the marker means includes a code inserted into the audio and/or video data streams.

15. A system according to claim 1 **characterized in that** the detection means monitors one or more properties and/or characteristics of the video and/or audio data streams.

16. A system according to claim 15 **characterized in that** the one or more properties and/or characteristics include any or any combination of the level of noise associated with the incoming video data stream, video sync., frequency, average picture level detection, luminance or chrominance.

17. A system according to claim 15 **characterized in that** the one or more properties and/or characteristics relating to each channel are stored in memory means in the BDR.

18. A system according to claim 1 **characterized in that** the detection means of the BDR has two parts; a first part for detecting the outgoing and returned signals from the VCR and a second part for detecting the outgoing and returned signals from the TV.

19. A BDR for use in a system according to claim 1.

20. A method of detecting a channel change in a television system, said television system including a video cassette recorder (VCR) and a broadcast data receiver (BDR) for receiving digital data from a remote broadcaster and processing and decoding said data to provide video, audio and/or auxiliary data for display on a television and/or for sounding via one or more speakers, said video, audio and/or auxiliary data relating to a plurality of television channels, said VCR communicating with said television via said BDR, said method including the steps of the BDR detecting which of the plurality of television channels the VCR and/or television is tuned to using detection means and, on detection of a difference between the channel the BDR is tuned to and the channel the VCR and/or television is tuned, said BDR sending the correct channel data to said VCR and/or said TV.

21. A method according to claim 18 **characterized in that** the method further includes the steps of the BDR transmitting one or more signals to the TV and/or VCR, the VCR and/or TV returning one or more signals to the BDR, the BDR comparing the signals transmitted with the signals returned using said detection means to determine whether there is a difference between the same.

22. A method according to claim 19 **characterized in that** once the BDR detects a difference between the channel the BDR is tuned to and the channel the VCR and/or the TV is tuned to, the BDR cycles through different channel data and transmits the different channel data to the VCR and/or TV until a match is found between the transmitted signal and the returned signal.
